(19) Europäisches Patentamt
European Patent Office
Office européen des brevets

(11) EP 2 995 915 A1

(12) EUROPEAN PATENT APPLICATION
published in accordance with Art. 153(4) EPC

(43) Date of publication:
16.03.2016 Bulletin 2016/11

(51) Int Cl.:
*G01J 3/28* (2006.01)　　　*A01G 7/00* (2006.01)

(21) Application number: 14794594.3

(22) Date of filing: 07.05.2014

(86) International application number:
PCT/JP2014/062254

(87) International publication number:
WO 2014/181797 (13.11.2014 Gazette 2014/46)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 08.05.2013 JP 2013098922

(71) Applicants:
• Nippon Medical & Chemical Instruments Co., Ltd.
Osaka-shi, Osaka 550-0002 (JP)

• Soma Optics, Ltd.
Tokyo 190-0182 (JP)

(72) Inventors:
• HARADA Kyoichi
Osaka 550-0002 (JP)
• URA Akiko
Tokyo 190-0182 (JP)

(74) Representative: Casalonga
Casalonga & Partners
Bayerstraße 71/73
80335 München (DE)

(54) QUANTUM METER

(57) [Problem] A practicable quantum meter capable of knowing the photosynthetic photon flux density at each wavelength in real time is presented.

[Solution] Measurement light made incident on a dispersive element 12 by an incident optical system 13 in a spectroscope unit 1 is dispersed by the dispersive element 12, and converted to photoelectric signal on the detector 14. Each photoelectric signal at each wavelength (spectral data) is transmitted to the processing unit 2, which is a general use computer, via interface members 16 and 26. The processing unit 2, to which a photosynthetic photon flux density measurement program 4 and a special device driver 262 have been installed, calculates the distribution of the photosynthetic photon flux density at each wavelength by processing the received spectral data, and displays it on display 24.

Fig. 5

**Description**

[Technical Field]

The invention of this application relates to measurement of photosynthetic photon flux density.

[Technical Background]

Among environmental conditions for plants to grow, light is extremely important. In various fields including plant factories and academic researches such as plant physiology, it is needed to know whether suitable light for carrying out photosynthesis is obtained.
Indexes such as illuminance and radiant flux density had been used previously in checking light strength relating to growth of plants. However, these are units of energy, not being indexes directly relating to photosynthesis. Therefore, photosynthetic photon flux density (PPFD) has been used recently.
The photon flux density is the index expressing amount of light according to not energy but the number of photons, which is the number of photons entering in a unit square per unit time. In particular, the wavelength range 400-700 nm, which is the absorption wavelength range of chlorophyll, is called "photosynthetic photon flux density".
The photosynthetic photon flux density is measured by a quantum meter. The quantum meter receives measurement light on an optical sensor such as Si photodiode sensor, and calculates the photon flux density by carrying out processing onto an output value from the optical sensor.

[Prior-art reference]

[Patent Document]

[Patent Document 1] JP, 2012-163482, A

[Non-patent Document]

[Non-patent Document 1]
Http://www.mext.go.jp/b_menu/shingi/gijyutu/gijyutu3/toushin/07091111/ 004.htm

[Summary of the Invention]

[Problem for the Invention to Solve]

By conventional quantum meters, however, though the total number of photons involved in photosynthesis is known, the number of photons at each wavelength is not known. If light of a specific wavelength is effective for growth of a specific plant, for instance, it is profitable to know how many numbers of photons are obtained at the wavelength. However, because conventional quantum meters do not carry out spectral measurements, this kind of measurement results cannot be obtained. In the patent document 1, the photon flux density at several wavelength ranges is measured as filters are used by turns. By this method, however, the photon flux density at each wavelength within the transmission band of one filter cannot be known.
When it is intended to know the photosynthetic photon flux density at each wavelength, it is needed to carry out the calculation to convert each measured value, i.e., spectral irradiance, into the photon flux density by applying the conversion formula, after measuring spectral irradiance by a general type spectrometer (spectral irradiance meter). This calculation is troublesome, and cannot bring the measurement result in real time. That is, it is impossible to know the photosynthetic photon flux density in situ as a detector is placed in the environment where a plant is irradiated by light.
The present invention was invented considering such problems, and has the meaning to provide a practicable quantum meter by which the photosynthetic photon flux density at each wavelength can be known in real time.

[Means for solving the problem]

To solve the above described problems, the invention claimed in the claim 1 is the quantum meter which is characterized by that
a dispersive element to which a measurement light enters is provided,
a detector to which the measurement light dispersed by the dispersive element enters is provided,
a processing member processing a photoelectric conversion signal output from the detector is provided,

a display to display the photoelectric conversion signal processed by the processing member is provided,

the processing member calculates of the photosynthetic photon flux density at each wavelength by processing the photoelectric conversion signal output from the detector,

the display is capable of displaying in real time a spectral photosynthetic photon flux density distribution of the measurement light under an environment where the measurement light exists,

the processing member comprises a memorizing member on which a photosynthetic photon flux density measurement program is implemented, or is capable of executing the photosynthetic photon flux density measurement program via a network,

the processing member calculates the photosynthetic photon flux density at each wavelength by executing the photosynthetic photon flux density measurement program, and displays the spectral photosynthetic photon flux density distribution on the display,

an input member is provided to give information to the processing member,

the photosynthetic photon flux density measurement program is capable of making a wavelength range designated according to effective photosynthetic wavelength for a plant on the input member, and capable of calculating the photosynthetic photon flux density at each wavelength within the designated wavelength range,

the photosynthetic photon flux density measurement program displays the spectral photosynthetic photon flux density in the designated wavelength range, not displaying the spectral photosynthetic photon flux density in other wavelength ranges,

the photosynthetic photon flux density measurement program is capable of making a plurality of discontinuous wavelength ranges designated,

the photosynthetic photon flux density measurement program is capable of calculating the photosynthetic photon flux density of each designated discontinuous wavelength range, and

the photosynthetic photon flux density measurement program displays the spectral photosynthetic photon flux density in each designated discontinuous wavelength range, not displaying the spectral photosynthetic photon flux density in other wavelength ranges.

To solve the above described problems, the invention claimed in the claim 2 is the quantum meter as claimed in the claim 1, which is characterized by that

the photosynthetic photon flux density measurement program is capable of calculating the effective spectral photosynthetic photon flux density for a specific plant by multiplying the spectral absorption rate of the plant to the measured spectral photosynthetic photon flux density, and capable of displaying the calculated effective spectral photosynthetic photon flux density on the display.

To solve the above described problems, the invention claimed in the claim 3 is the quantum meter as claimed in the claim 1 or 2, which is characterized by that

the dispersive element and the detector are provided as those composing a spectroscope unit,

the processing member is provided as a component of a processing unit, and

the processing unit is a general use computer, in which the photosynthetic photon flux density measurement program is installed.

To solve the above described problems, the invention claimed in the claim 4 is the quantum meter as claimed in the claim 3, which is characterized by that

a device driver that receives the photoelectric conversion signal output from the detector via a general use interface is installed in the processing unit, and

the photosynthetic photon flux density measurement program calculates the photosynthetic photon flux density at each wavelength by processing the photoelectric conversion signal which the device driver receives.

[Effect of the Invention]

As described as follows, the quantum meter claimed in the claim 1 of this application can be used preferably for such uses as investigation of light environment for plants and evaluation of artificial light sources for plant growth, because a spectral photosynthetic photon flux density distribution is displayed on the display in real time.

Because the photosynthetic photon flux density at each wavelength is calculated and displayed as a result that the processing member executes the photosynthetic photon flux density measurement program, calculation and any change of the displaying condition are easy.

Moreover, because a spectral photosynthetic photon flux density distribution only for a designated wavelength range can be displayed, this quantum meter is preferable in observing only the effective wavelength range for photosynthesis.

In addition, because it is possible to designate a plurality of discontinuous wavelength ranges, optimum measurements on effective wavelength ranges for various plants are enabled.

In addition, according to the invention claimed in claim 2, it is possible to know how efficient a specific light environment is for the growth of a specific plant, because the effective spectral photosynthetic photon flux density can be displayed. Therefore, the quantum meter is made more preferable for carrying out such works as investigation of light environments, and evaluation and research of artificial light sources.

In addition, the invention claimed in the claim 3 brings the advantages of reducing the cost of the quantum meter and making the introduction of it easier, because it is composed of the spectroscope unit and the processing unit that is a general use computer.

In addition, because the general use interface is adopted to receive the photoelectric conversion signal from the detector in the spectroscope unit, the invention claimed in the claim 4 brings the advantage that a general use spectroscope can be adopted as long as it comprises such an interface. If a user has such a spectroscope, therefore, a real-time spectral photosynthetic photon flux density measurement is enabled only by installing a software package to the computer. The introduction is made futher easier.

[Brief Description of Drawings]

Fig. 1 shows the schematic configuration of a quantum meter according to an embodiment of the present invention.
Fig. 2 is a schematic view of a software package installed to a general use computer composing the processing unit.
Fig. 3 shows an outline structure of the photon flux density measurement program which the quantum meter shown in Fig. 1 comprises.
Fig. 4 is a schematic view showing one example of a main window displayed on the display by the main module of the photon flux density measurement program.
Fig. 5 is a schematic view showing one example of a wavelength range setting window.
Fig. 6 is a schematic view showing one example of an execution result by a absolute value calculation module.
Fig. 7 is a schematic view showing one example of an execution result by the relative value calculation module.
Fig. 8 is a flow chart showing an outline of an absolute value calculation module.
Fig. 9 is a flow chart showing an outline of a relative value calculation module.
Fig. 10 shows one example of the status where two or more spectral photosynthetic photon flux density distributions are displayed as overlapped.
Fig. 11 is a schematic view showing calculation of the photon efficiency.

[Mode to practice the Invention]

Next, a mode to practice the present invention, hereinafter called "embodiment", is described.

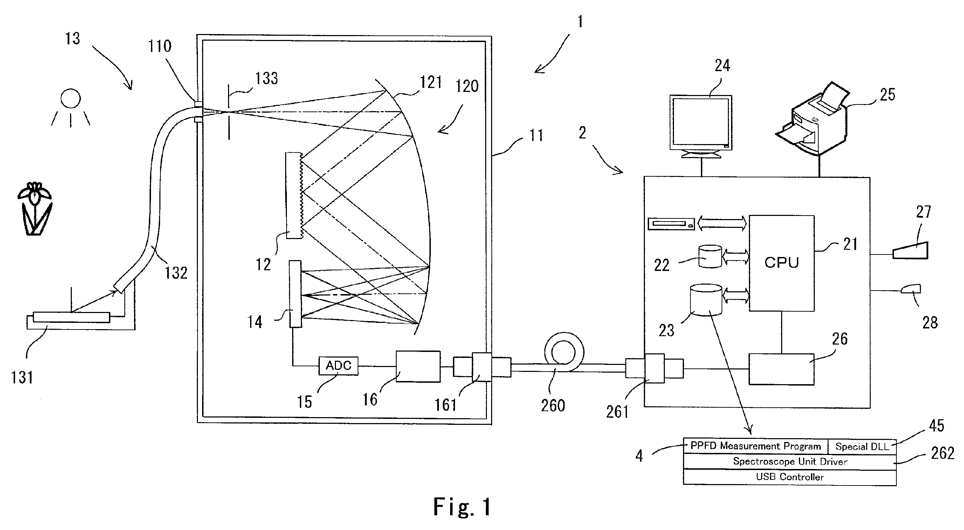

Fig. 1 shows the schematic structure of the quantum meter according to the embodiment of the invention. The quantum meter shown in Fig. 1 is used in measuring the photosynthetic photon flux density, and in measuring the photon flux density in the wavelength range of 400-700 nm.

One of the major features of this quantum meter is the point that measurement light is dispersed and then measured as the photosynthetic photon flux density at each wavelength in real time. This quantum meter is mainly composed of a spectroscope unit 1 and processing unit 2 as shown in Fig. 1.

First of all, the spectroscope unit 1 is described. As shown in Fig. 1, the spectroscope unit 1 comprises a casing 11, a dispersive element 12 provided in the casing 11, and an incident optical system 13 to make the measurement light enter into the dispersive element 12. In this embodiment, the incident optical system 13 comprises a photoreceiver 131, an optical fiber 132 to guide the measurement light from the photoreceiver 131, and an incident slit 133 placed at the emission side of the optical fiber 132.

The photoreceiver 131 is to be disposed at a measurement position, and may have a structure receiving the measurement light on a light diffusion plate if necessary. Though a reflection-type light diffusion plate is used in this embodiment, a transmission-type light diffusion plate may be used to enter the measurement light into the optical fiber 132. The optical fiber 132 is provided to make the photon flux density measurement easier, enabling to dispose the photoreceiver 131 at a desired place. A quartz-based lightguide fiber is used as the optical fiber 132. As shown in Fig. 1, a mounting port 110 on which the emission end of the optical fiber 132 is mounted is provided on the casing 11. An incident slit 133 is located near the mounting port 110.

A diffraction grating is used as the dispersive element 12. Two or more dispersive elements sharing a wavelength range may be used. The dispersive element 12 is provided as a component of the dispersive optical system 120. In this embodiment, a Fastie-Ebert type one is adopted as the dispersive optical system 120. This optical system comprises a concave mirror 121. The concave mirror 121 collimates the light from the incident slit 133, irradiates the dispersive element (diffraction grating) 12 with it, concentrates the light dispersed by the dispersive element 12 to each wavelength, and makes it enter each sensor element of a measurement sensor. Another dispersive optical system such as Czerny-Turner type may be adopted as well.

In the casing 11, the quantum meter comprises a detector 14 as the measurement sensor into which the measurement light dispersed by the dispersive element 12 enters, an AD converter 15 that converts the output from the detector 14 into a digital signal, and an interface member 16 to transmit the output from the detector 14 to the processing unit 2.

A linear array sensor is used as the detector 14 in this embodiment. The linear array sensor has the structure where sensor elements, i.e., photoelectric conversion elements such as photodiodes or CCD, are linearly arrayed. Each sensor element converts the dispersed light of each wavelength into an electric signal respectively, and outputs each electric signal. Width of the light receiving surface on each sensor element and the number of the elements are determined according to the resolution of the dispersive element 12 and a whole wavelength range to measure. For instance, a linear array sensor where about 2,048 Si photodiodes are arrayed is used as the detector 14.

Arrangement and posture of the detector 14 are optimized in relation with the dispersive element 12. That is, each sensor element is arranged and posed so that the light of each wavelength dispersed by the dispersive element 12 arrives respectively.

The detector 14 that is the linear array sensor accumulates, i.e., integrates, the detected values in a certain period, and then makes them outputable. This period is called "exposure time", which is about 2.5 microseconds to 6 seconds. A USB interface is adopted for the interface member 16 in this embodiment. The interface member 16 has a USB port 161.

On the other hand, the processing unit 2 is a general use computer such as personal computer, to which a special software package is installed. Concretely, the processing unit 2 is a computer to which a general use OS such as Windows (registered trademark of Microsoft Corporation) has been installed. Any of available computers such as notebook, desktop or workstation can be used as the processing unit 2. As well known, the computer comprises a hard disk 23, display 24, and printer 25 in addition to a CPU 21 and memory 22.

In addition to the measurement program carrying out the processing including calculation of the photosynthetic photon flux density, the special software package contains a special device driver, hereinafter referred as "spectroscope unit driver". The spectroscope unit driver is to make the spectroscope unit 1 work as a peripheral device of the processing unit 2.

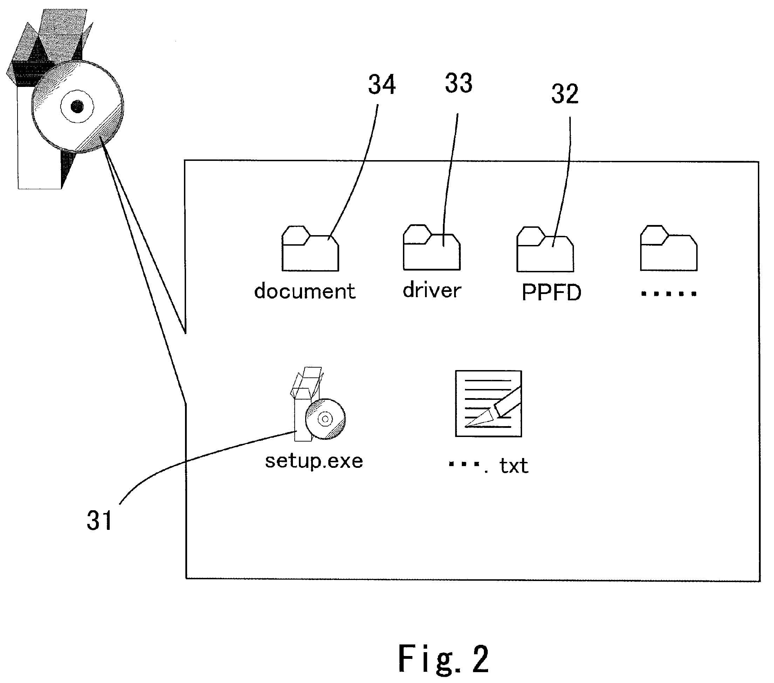

Fig. 2 shows a schematic view of the software package installed to a general use computer composing the processing unit 2. The status shown in Fig.2 is on the assumption that the software package is provided by a medium, such as DVD-ROM and CD-ROM, and is readout. Still, it may be compressed and download via a network, e.g., the Internet.

As shown in Fig. 2, the software package contains an execution file (setup.exe) 31 for installation, a folder 32 in which the photosynthetic photon flux density measurement program is stored, a folder 33 in which the spectroscope unit driver is stored, and a folder 34 in which text files of some kinds of manuals are stored. When *setup.exe* is executed, the photosynthetic photon flux density measurement program, hereinafter referred as "PPFD measurement program", and the spectroscope unit driver are installed to the general use computer. Because this is the same as in other application software, detailed description is omitted.

A user who intends to measure the photosynthetic photon flux density by using the quantum meter of the embodiment obtains the software package shown in Fig.2 in addition to the spectroscope unit 1, and installs it to his/her computer. As a result, the quantum meter shown in Fig. 1 is realized.

The general use computer as the processing unit 2 is configured to receive the photoelectric conversion signal output from the detector 14 in the spectroscope unit 1 via the general use interface members 16, 26. Though USB is adopted for the general use interface members 16, 26 in this embodiment, it is not limiting.

The interface member 16 in the spectroscope unit 1 has a USB port 161 connected with the detector 14. On the other hand, when the software package is installed as described above, the spectroscope unit driver 262 is implemented on the USB controller in the processing unit 2 as conceptually shown in Fig. 1. As a result, the PPFD measurement program 4 can work as an application using the spectroscope unit driver 262. The interface member 26 is connected to the CPU 21 via a bus such as PCI, and receives the output data, i.e., photoelectric conversion signal output of the detector 14, from the spectroscope unit 1 connected by the USB cable 260.

In addition, the processing unit 2 comprises the memory 22 and hard disk 23, which are as memorizing members, and the display 24 where information is displayed. The memorizing members are to memorize measurement results by processing the output data from the spectroscope unit 1. The processing unit 2 comprises a keyboard 27 and mouse 28 as input members. These input members are used to give information to the CPU 21 as a processing member.

The spectroscope unit driver 262 is the one carrying out the interrupt transmission of the output data from the spectroscope unit 1. Concretely, the detector 14 accumulates the photoelectric conversion signal in the exposure time at each sensor element and makes it outputable as described. The spectroscope unit driver 262 transmits a control signal to the detector 14 via the interface members 16, 26 so that the photoelectric conversion signal of each sensor element is output from the output port 161. The detector 14 transmits serially the photoelectric conversion signal of each sensor element via the output port 161.

For sensor elements, for instance, the sensor element into which the light of shortest wavelength λ1 enters is S1, the sensor element into which the light of the next shortest wavelength λ2 enters is S2, and similarly, the other sensor elements are S3 to Sn in order of shortness of wavelength. Each interval Δλ among λ1, λ2, λ3, ..., λn is the quantity depending on the resolution of the dispersive element 12, and is the band width almost as same as the resolution. The detector 14 outputs serially each output I1 to In of S1 to Sn. The spectroscope unit driver 262 receives the signal transmitted via the interface members 16 and 26, and preserves it in an allocated memorization area of the memory 22 in a specific file format. The spectroscope unit driver 262 sends a control signal to each of the interface members 16 and 26 to carry out the interrupt transmission of the output signal from the detector 14. For such a spectroscope unit driver, the device driver included in the software attached to Multichannel Spectrometer S-2431 sold from Soma Optics, Ltd., Japan or similar one may be used. Therefore, more detailed description is omitted.

Next, the PPFD measurement program installed in the processing unit 2 is described.

The PPFD measurement program is the program that executes a processing onto the output data from the detector 14, i.e., output I1 to In from each sensor element S1 to Sn, received by the spectroscope unit driver. By this processing, the spectral photosynthetic photon flux density distribution is calculated and displayed. The PPFD program is the application program that runs on a general use OS such as Windows.

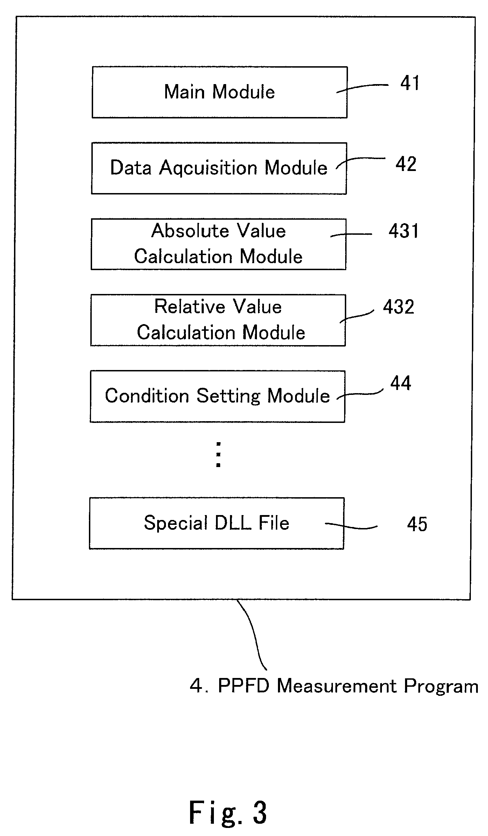

Fig. 3 shows an outline structure of the PPFD program which the quantum meter shown in Fig. 1 comprises. As shown in Fig. 3, the PPFD measurement program comprises a main module 41, a data acquisition module 42, processing modules 431,432, a condition setting module 44, and a special DLL file 45.

The PPFD measurement program 4 is programmed so as to deal measurement data in a special format file identified by a special format identifier. Hereinafter, this file is called "PPDF file". An empty (initial) PPFD file is included in the software package though it is not shown in the figures.

In this embodiment, it is possible to record two or more sets of spectral data in the PPFD file. Hereinafter, one set of spectral data is called "spectral data set". One spectral data set is the output from each sensor element at each λ1 to λn as described. In the PPFD file, two or more, for instance, up to about nine, spectral data sets may be recorded as well as setup information about the processing condition for each spectral data set and the display condition for each result.

The main module 41 is to display a window, hereinafter referred as "main window". In the main window, kinds of inputs are done, and spectral data and other measurement results are shown. The data acquisition module 42 is to make the output data transmitted from the spectroscope unit 1 and acquire it. The processing modules 431, 432 are to obtain the spectral photon flux density distribution by processing the acquired data. The condition setting module 44 is the module to set the conditions for the processing and others. The special DLL file 45 is provided to link modules, including the above-described modules and general use modules in the processing unit 2.

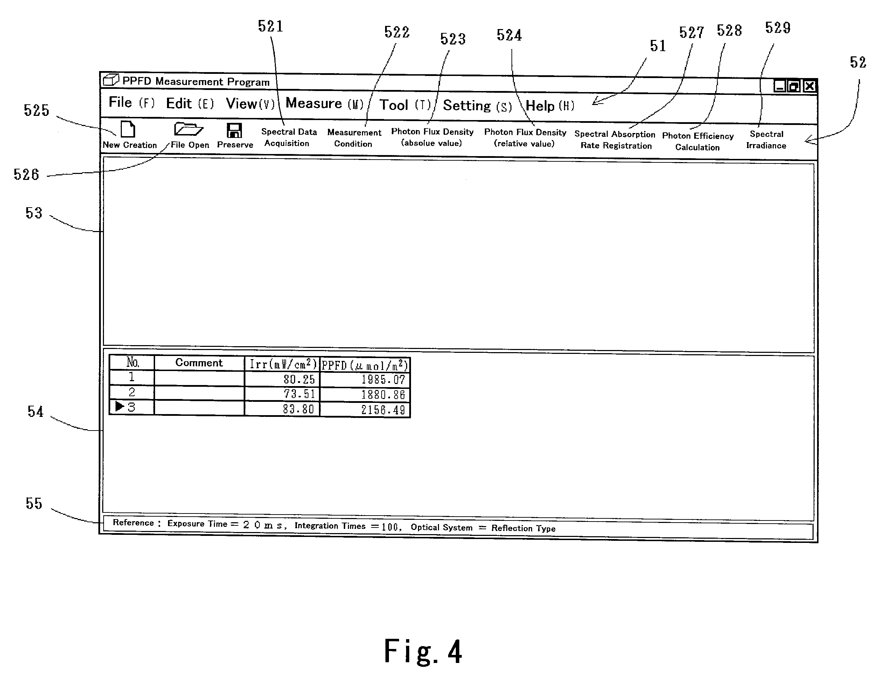

Fig. 4 is a schematic view showing one example of the main window displayed on the display by the main module 41 of the PPFD measurement program. As shown in Fig. 4, the main window contains a toolbar 52, as well as a menu bar 51 where typical menu buttons are laid out. The toolbar 52 is used to carry out various settings and processing necessary for measurement and display of spectral photosynthetic photon flux density distributions.

As shown in Fig. 4, a button 521 with the caption "Spectral Data Acquisition", hereinafter referred as "data acquisition button", is provided in the toolbar 52. The data acquisition module 42 that makes spectral data, i.e., one spectral data set, transmitted from the spectroscope unit 1 and acquires it is linked to the data acquisition button 521.

The data acquisition module 42 is to record the spectral data set, which is received from the spectroscope unit 1 by the spectroscope unit driver 262, in the PPFD file currently opened. The data acquisition module 42 is programmed so as to give an ID number to the received spectral data set automatically, and to record it with the ID number in the PPFD file.

Three frames 53, 54, 55 are provided in the main window 5 as shown in Fig. 4. Three frames 53, 54, 55 are arranged vertically. The one 53 at the top is the frame in which a measurement result is displayed as a graph, hereinafter referred as "graph display frame". The one 54 at the middle is the frame to display a measurement result as numerical data and to make a spectral data set selected, which is hereinafter referred as "numerical data display frame". The one 55 at the bottom is the narrow, one-line frame, in which the currently selected measurement condition and the currently selected processing condition are displayed for confirmation, hereinafter referred as "bottom frame".

A situation where one spectral data set is acquired by the data acquisition module 42 is shown in Fig. 4. This is the situation where the third spectral data set is newly acquired. As shown in Fig. 4, the data acquisition module 42 gives "No.3" to this spectral data set as the ID number. The data acquisition module 42 is programmed so as to calculate the whole, i.e., in the 400-700 nm wavelength range, irradiance ($mW/cm^2$) and the whole photosynthetic photon flux density, and to display them in the numeric data display frame 54 with the ID number when one spectral data set is acquired.

As shown in Fig. 4, the exposure time and the number of integration times in acquiring the spectral data set are displayed for confirmation in the bottom frame 55. In the quantum meter of the embodiment, the exposure time can be preset by an input on the input member 27, 28 in the processing unit 2. The preset value of the exposure time is displayed here. To reduce the measurement error, the quantum meter of the embodiment is capable of making the detector 14 output a signal averaged in two or more times of measurements. The number of integration time for average value calculation, which is carried out for each wavelength, can be preset by the input member 27, 28 as well. This preset value is displayed in the bottom frame 55 for confirmation.

As shown in Fig. 4, a button 522 with the caption "Measurement Condition", hereinafter referred as "condition setting button", is provided in the toolbar 52. The condition setting button 522 is a pull-down button. In a pull-down list to be displayed, a button with the caption "Wavelength Range (PPFD)", hereinafter referred as "wavelength range setting button", is included. When the wavelength range setting button is clicked, a window to designate a wavelength range, hereinafter referred as "wavelength range setting window", is displayed as a new window.

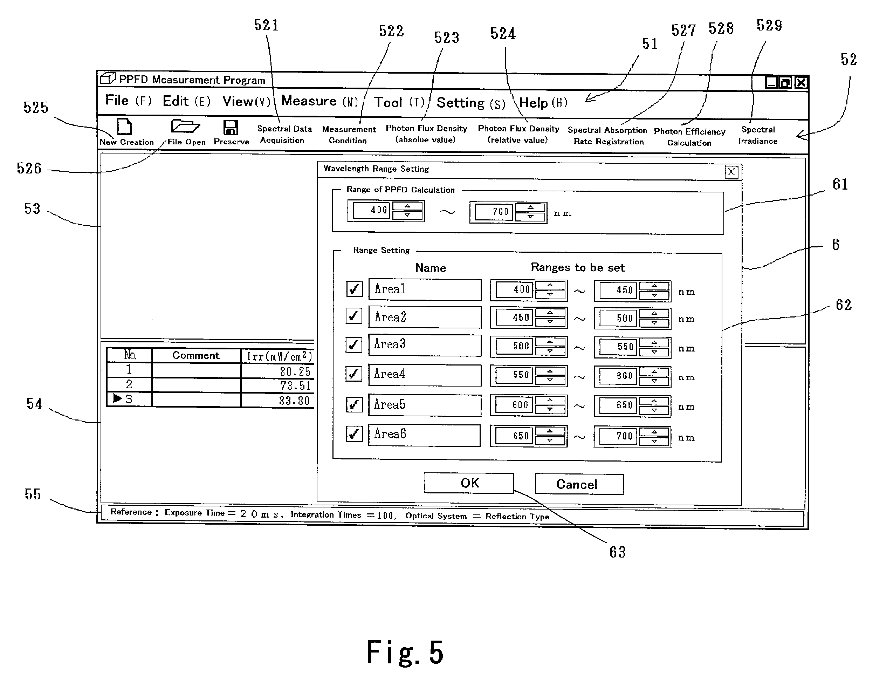

Fig. 5 is a schematic view showing one example of the wavelength range setting window. As shown in Fig. 5, the wavelength range setting window 6 contains a whole-range setting column 61 to designate a whole wavelength range in measuring the photosynthesis photon flux density, and an individual-range setting column 62 to designate each wavelength range within the whole range designated in the whole-range setting column 61. In the whole-range setting column 61, the lower bound value in a whole wavelength range, i.e., shortest wavelength, and the upper bound value therein, i.e., longest wavelength, are input by numerals (unit is nm).

In this embodiment, the photon flux density can be displayed for six divided wavelength ranges. In the individual-range setting column 62, input columns for six wavelength ranges are provided. Each input column has an input box to select whether calculation and display are done or not (checkbox in this example), a textbox to input name of the range, and input boxes to designate the upper and lower bounds of the range.

An OK button 63 is provided in the wavelength range setting window 6. The condition setting module 44 starts when the input is done in each input column and the OK button 63 is clicked. The condition setting module 44 is programmed so as to memorize information input in each column to an allocated area in the PPFD file.

Though it is omitted in Fig.2, the software package contains a file where calibration data for the spectroscope unit 1 has been recorded. The calibration data has been measured in shipping the spectroscope unit 1 and recorded in the file (calibration data file) to be contained in the software package. The software package is attached the spectroscope unit 1 in shipping and provided to a user as an accessory.

For the calibration data, spectral irradiance is measured by the spectroscope unit 1 as a standard light source having a known spectrum is used. According to the result of this measurement, the data where the spectral sensitivity characteristic of the detection system in the spectroscope unit 1 is recorded as the calibration data. By referring to the calibration data, calculation of the absolute value for spectral irradiance is enabled. The calibration data file is memorized in an allocated area in the memorizing members 22, 23 of the processing unit 2, when the software package is installed.

As shown in Fig.4, on the other hand, a button 523 with the caption "Photon Flux Density (absolute value)", hereinafter referred as "absolute value button", and a button 524 with the caption "Photon Flux Density (relative value)", hereinafter referred as "relative value button written" are provided in the toolbar 52. Corresponding to these, the quantum meter comprises the absolute value calculation module 431 that calculates absolute values, and the relative value calculation module 432 that calculates relative values, as processing modules. The absolute value button 523 is linked to the absolute value calculation module 431, and the relative value button 524 is linked to the relative value calculation module 432.

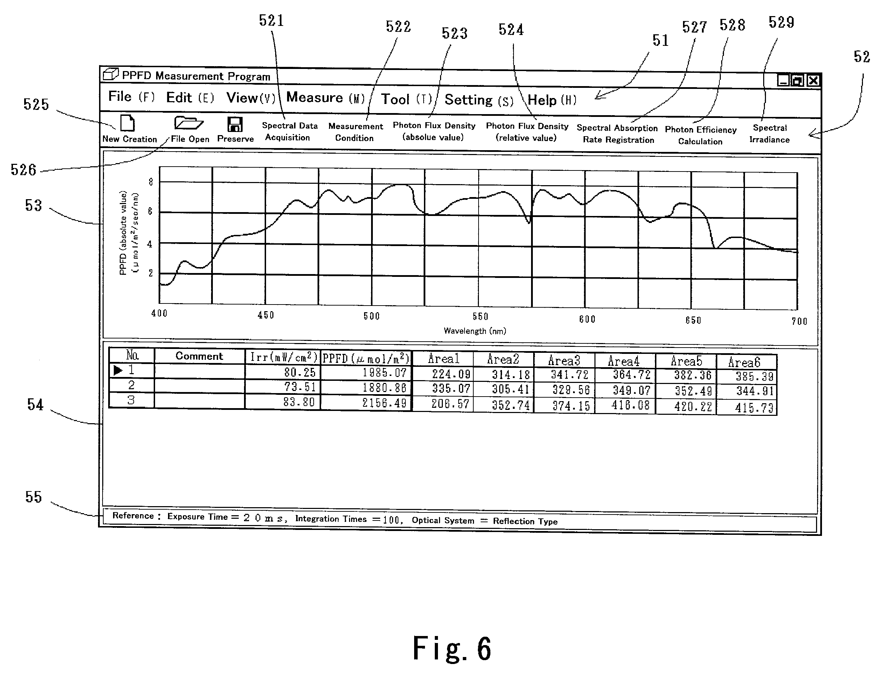

Fig. 6 is a schematic view showing an example of execution result by the absolute value calculation module. As shown in Fig. 6, a spectral photosynthetic photon flux density distribution is displayed as a graph in the graph display frame 53 when the absolute value calculation module 431 is executed. The graphs and numerals of spectral irradiance and photosynthetic photon flux density appearing in the specification and figures are imaginary for the sake of explanation, not being values actually measured.

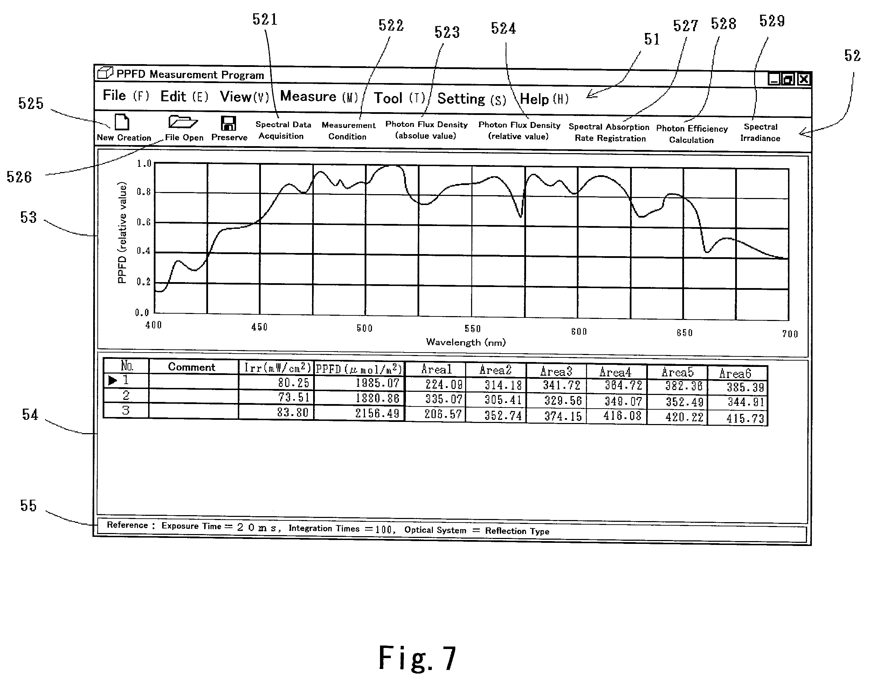

Fig. 7 is a schematic view showing an example of execution result by the relative value calculation module. In this, the relative value was calculated on the same spectral data set as in Fig.6. Therefore, Fig.7 is different only in the vertical axis from Fig. 6, showing the same graph.

Now, calculation of the photosynthetic photon flux density is described. The photosynthetic photon flux density is numerical density of photons per unit time in unit area as described. Usually, using $\mu$mol (micro-mole), its unit is $\mu$mol/m$^2$/sec. In this, $1\mu$mol = $10^{-6}$ × Avogadro's Number, i.e., $6.022137 \times 10^{17}$.

The photosynthetic photon flux density of each wavelength (PPFD($\lambda$)), is calculated according to the formula (1). In the formula (1), I($\lambda$) is spectral irradiance ($\mu$W/cm$^2$/nm/sec).

[Formula (1)]

$$PPFD(\lambda) = \frac{1}{11963} I(\lambda) \cdot \lambda \quad (1)$$

Therefore, amount of the photosynthetic photon flux density, i.e., the photosynthetic photon flux density in all wavelengths, is obtained by integrating the formula (1) in the wavelength 400-700 nm. That is, it is obtained according to the following formula (2).
[Formula (2)]

$$PPFD = \frac{1}{11963} \int_{400}^{700} I(\lambda) \cdot \lambda \cdot d\lambda \quad (2)$$

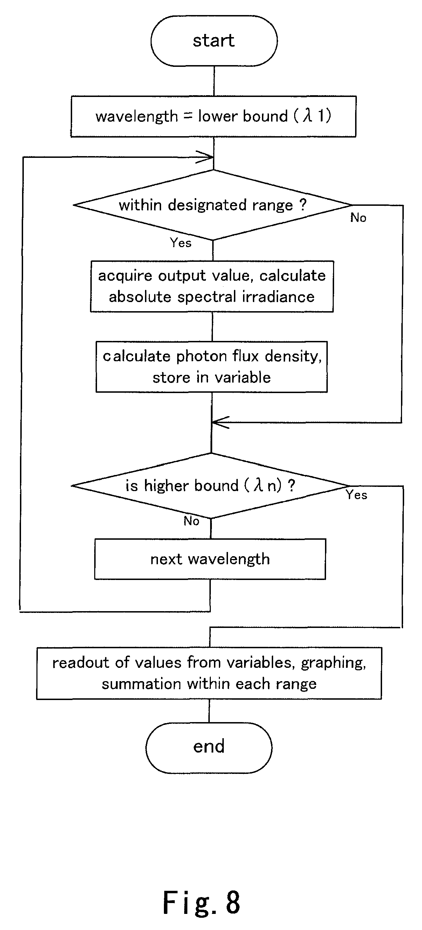

Fig. 8 is a flow chart showing an outline of the absolute value calculation module. The absolute value calculation module is executed as the ID number identifying a spectral data set and processing condition are passed as the arguments. The processing condition is a designated wavelength range within which the photosynthetic photon flux density is calculated. This condition is set beforehand by the condition setting module 44 as described.

As shown in Fig. 8, the absolute value calculation module judges whether the initial, i.e., shortest, wavelength $\lambda 1$ is within the designated range in the processing condition. If it is within the range, the output value at this wavelength in the designated spectral data set is acquired. Then, the absolute value of irradiance at this wavelength (spectral irradiance) is calculated referring to the calibration data for this output value. Next, the absolute value calculation module substitutes the calculated value of irradiance into the formula (1), and calculates the photon flux density at this wavelength. The calculated photon flux density is temporarily stored in a variable.

Then, the absolute value calculation module judges whether the next wavelength $\lambda 2$ is within the processing condition as well. If the next wavelength is within the processing condition, the output value is acquired from the spectral data set, and the absolute value of irradiance is calculated similarly. The absolute value of the photon flux density is calculated according to the formula (1) and stored in another variable temporarily.

The absolute value calculation module repeatedly carries out the processing similarly up to the last, i.e., longest, wavelength $\lambda n$, and stores each value of the photon flux density at each wavelength in each variable respectively as far as it is within the processing condition.

Afterwards, the absolute value calculation module carries out graph display and summation within each wavelength range. That is, the absolute value calculation module reads out the values from the variables, graphs them, and displays the graph in the graph display frame 53 in the main window as shown in fig. 6. The absolute value calculation module sums up the values within each wavelength range, and displays each sum in each column of the numeric data display frame 54 according to the processing condition. When a wavelength range designated under the name "Area 1" is 400-450 nm, for instance, each of the photosynthetic photon flux density (absolute value) is summed up within this wavelength range, and is displayed in the column for this range in the numeric data display frame 54. The absolute value calculation module ends when the graph display and the display of each sum within each wavelength range are done.

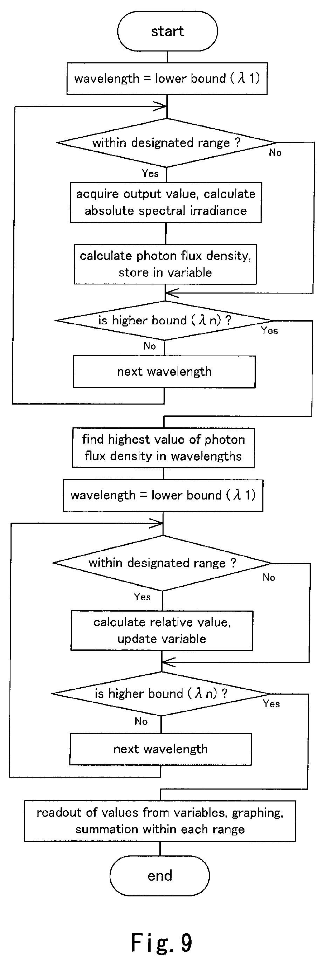

Fig. 9 is a flow chart showing an outline of the relative value calculation module. The relative value calculation module is executed as the ID number identifying a spectral data set and the processing condition are passed as the arguments. This is the same as the absolute value calculation module. The relative value calculation module judges whether each wavelength is within the processing condition similarly. If a specific wavelength is within the processing condition, the relative value calculation module acquires the output value from the spectral data set and calculates the absolute value of the irradiance by referring to the calibration data. Afterwards, the relative value calculation module calculates the value of photosynthetic photon flux density at each wavelength according to the formula (1) and stores it in each variable temporarily.

After the processing is carried out for the last wavelength $\lambda n$, returning to the first wavelength $\lambda 1$, the relative value calculation module reads out the values from the variables in order, and finds the highest value of the photosynthetic photon flux density. Then, the relative value calculation module recalculates the relative value of the photosynthetic photon flux density at each wavelength by comparing with this highest value, and updates the variables by storing the calculated relative values.

When calculation and storage of the relative values are done up to the last wavelength ($\lambda n$), the relative value calculation module similarly carries out graphing, summation within each wavelength range, and display of each sum similarly. That is, the relative value calculation module reads out the values from the variables, graphs them in the graph display frame 53 in the main window, sums up the relative values of the photosynthetic photon flux density within each wavelength range, and displays each sum in each column in the numeric data display frame 54. By this, the relative value calculation module ends. Each sum within each wavelength range may be calculated and displayed as a relative value against the maximum one in a specific wavelength range, other than it is displayed just as calculated.

As shown in Fig. 4, a button 529 with the caption "Spectral Irradiance", hereinafter referred as "irradiance button", is provided in the toolbar 52 in the main window. Though it is omitted in Fig. 3, the PPFD measurement program contains a module to calculate and display spectral irradiance, hereinafter referred as "irradiance calculation module". The irradiance calculation module is programmed so as to calculate spectral irradiance of a designated spectral data set and display it in the graph display frame 53. The irradiance calculation module calculates the absolute value of irradiance at each wavelength by referring to the calibration data, graphs the calculated values, and displays the graph in the graph display frame 53, as same as the absolute value calculation module and the relative value calculation module described above.

As shown in Fig. 4, a button 525 with the caption "New Creation", hereinafter referred as "new creation button", and a button 526 with the caption "File Open", hereinafter referred as "file open button" are provided in the toolbar 52 in the main window.

The new creation button 525 is the button to execute a module that newly creates a PPFD file. This module is executed when a user wishes to have a measurement result in a new PPFD file. For instance, it is executed in the situation where the user wishes to preserve another measurement result under another lighting environment in another PPFD file, or where the user wishes to preserve another measurement result under another processing condition in another PPFD file.

The file opening button 526 is provided to open a file preserved before. This button may be used in looking into the spectral photosynthetic photon flux density distribution in a preserved PPFD file, and/or in recalculating it under a different processing condition. Though it is not shown in the figures, a button with the caption "Preservation" is displayed when the "File" button in the menu bar is clicked. A PPFD file being executed can be preserved by this button.

As described above, the absolute value calculation module 431 and relative value calculation module 432 carry out calculation and display of the photosynthetic photon flux density for a wavelength range designated in the processing condition. Because any wavelength range can be designated by clicking the setting button, the photosynthetic photon flux density can be displayed for any wavelength range.

For instance, chlorophyll is the major pigment in green plants. It is known that chlorophyll has a high absorption for blue light i.e., about 435 nm, and red light, i.e., about 680 nm. For green light around 500 nm, on the other hand, it has a low absorption. Therefore, calculation and display of the photosynthetic photon flux density only for the ranges of blue light and red light may make it easier to judge whether a light environment is appropriate for photosynthesis. Moreover, because a sum of the photosynthetic photon flux density for a designated wavelength range is displayed in this embodiment, it is possible to confirm how many photons are obtained in an effective wavelength range, and to make comparison among wavelength ranges easily.

Moreover, the quantum meter of the embodiment is capable of overlapping spectral photosynthetic photon flux density distributions obtained by carrying out the processing onto a plurality of spectral data sets, and displaying them in a graph. This point is described as follows.

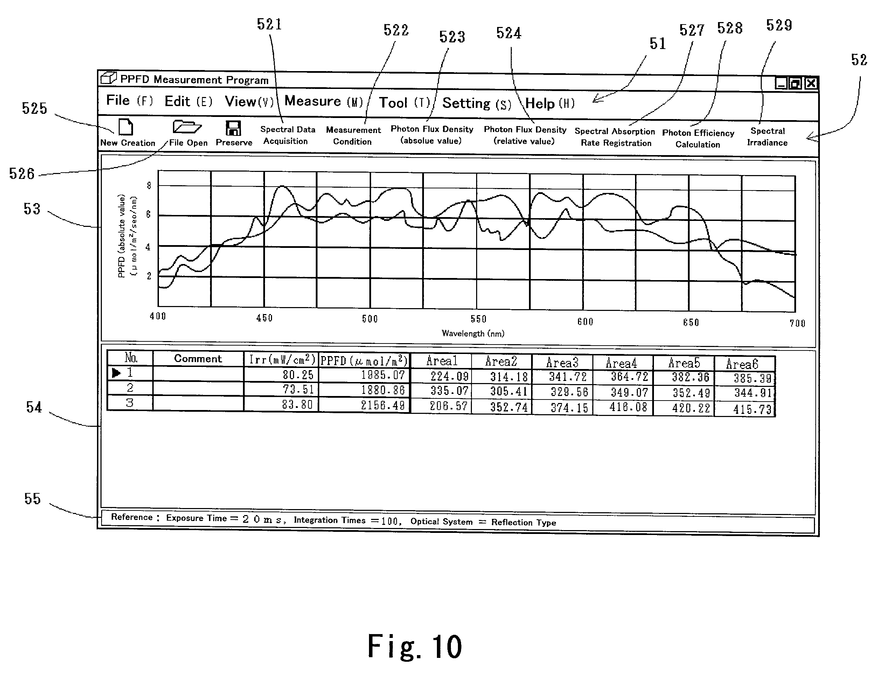

A button 63 with the caption "Display" is provided on the menu bar 51 in the main window. A button with the caption "Overwrite" is included in the pull-down list displayed by clicking this button 63. When this button is clicked, an input (e.g., putting a check mark by clicking) whether a plurality of spectral photosynthetic photon flux density distributions are overlapped is done. Fig. 10 shows one example of overlapping display, that is, a situation where two or more spectral photosynthetic photon flux density distributions are displayed as overlapped.

In displaying a plurality of spectral photosynthesis photon flux density distributions as overlapped, a plurality of spectral data sets are designated in the numeric data display frame 54. For instance, it is possible to adopt the configuration where a plurality of spectral data sets are designated by left-clicking (or enter-key pressing) as the Ctrl key is pressed while the mouse pointer is located in each line displaying each spectral data set. The absolute value calculation module 431 is programmed so to carry out the processing for a plurality of spectral data sets when the absolute value button is clicked while those data sets are designated, to calculate each absolute value of the spectral photosynthetic photon flux density, and to display them as overlapped in a graph as shown in Fig. 10. This is the same as the relative value calculation module 432.

The quantum meter of the embodiment can measure the photon efficiency that is the index how much efficient a light environment is for photosynthesis of a specific plant. This point is described as follows.

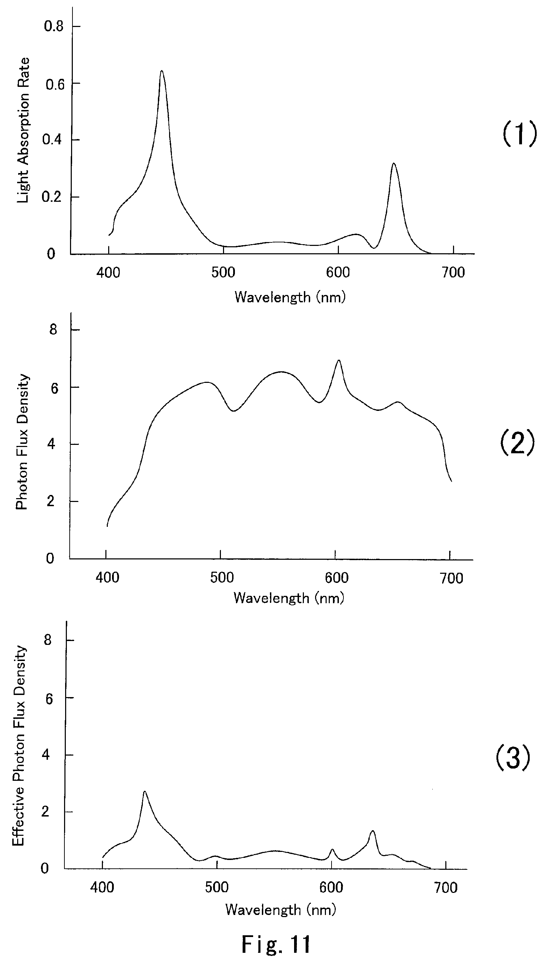

Fig. 11 is a schematic view showing calculation of the photon efficiency. The photon efficiency is the ratio of the total effective photosynthetic photon flux density against the total photosynthetic photon flux density measured in all the wavelength ranges. Photosynthesis of plants might have wavelength dependencies, one of which is the wavelength dependency in the light absorption of pigments as described. The spectral absorption distribution of a specific chlorophyll molecule is shown in Fig. 11(1) as an example.

When light of the spectral photosynthetic photon flux density distribution shown in Fig. 11(2) is irradiated to this chlorophyll, influence on the function of photosynthesis depends on the light absorption of the chlorophyll. Therefore, the density of photon flux that contributes to photosynthesis, i.e., effective photosynthetic photon flux density (PPFD'), is obtained by multiplying each value of photon flux density by the light absorption rate at each wavelength. That is, the effective photosynthetic photon flux density (PPFD') is expressed by the following formula (3).

[Formula 3]

$$PPFD' = \int_{400}^{700} A(\lambda) P(\lambda) d\lambda \qquad (3)$$

In the formula (3), $A(\lambda)$ is the optical absorption rate at each wavelength, and $P(\lambda)$ is the photosynthetic photon flux density at each wavelength. When the spectral photosynthesis photon flux density distribution shown in Fig. 11(2) is multiplied by the spectral absorption rate shown in Fig. 11(1), the distribution becomes as shown in Fig. 11(3). This is the effective spectral photosynthesis photon flux density distribution. The value obtained by integrating this distribution means quantity (the total number) of the photosynthetic photon flux density effective for this chlorophyll under this light environment.

Thus, because the photon efficiency E is the ratio of the effective photosynthetic photon flux density against the total photosynthetic photon flux density, it is obtained according to the following formula (4).

[Formula 4]

$$E_{PPFD} = PPFD'/PPFD \qquad (4)$$

As shown in Fig. 4, a button 527 with the caption "Spectral Absorption Rate Registration", hereinafter referred as "registration button", and a button 528 with the caption "Photon Efficiency Calculation", hereinafter referred as "efficiency calculation button" are provided in the toolbar 52 in the main window. Though it is not shown in Fig. 3, the PPFD measurement program has a registration module and an efficiency calculation module. The registration button 527 is linked to the registration module, and the efficiency calculation button 528 is linked to the rate calculation module.

The registration module starts when the registration button 527 is clicked. The registration module is programmed so as to additionally display a window to make a user designate the file in which a spectral absorption rate is recorded. The registration module is programmed so as to carry out necessary conversion of the spectral absorption rate when the file is designated there, and to record the conversed spectral absorption rate in the PPFD file. The necessary conversion is the conversion to match the interval among spectra i.e., spectroscopic width, to that of spectral data sets. To enable calculation of the photon efficiency for plants of difference kinds, the registration module is programmed so as to register a plurality of spectral absorption rates, and is programmed so as to register each spectral absorption rate with an ID number to identify each rate.

The efficiency calculation module starts when the efficiency calculation button 528 is clicked. The efficiency calculation module starts under the situation where at least one spectral data set is selected in the numeric data display frame 54. If no spectral data set is selected, an error message as such is displayed. If it is confirmed that at least one spectral data set has been selected, the efficiency calculation module displays a window, and makes a user select one of the spectral absorption rates having been registered. Then, the efficiency calculation module applies the selected spectral absorption rate to the spectral data set, and calculates the effective photosynthetic photon flux density according to the formula (3). The efficiency calculation module calculates the photon efficiency by applying the calculated effective photosynthetic photon flux density to the formula (4), and additionally displays it in the line of the spectral data set in the numeric data display frame 54. If two or more spectral data sets have been selected, this processing is done for each data set, and each value of the photon efficiency is displayed.

When a user intends to measure the photosynthetic photon flux density by the quantum meter of the embodiment having the above-described configuration, he or she brings the quantum meter in a light environment to be measured. For instance, the user uses a notebook computer as the processing unit 2. The user installs the spectroscope unit driver and the photon flux density measurement program to his/her computer and brings it with the spectroscope unit 1 in the measurement place. The notebook computer is started up after a power switch of the spectroscope unit 1 is turned on, and the PPFD measurement program is made activated. In this status, the user disposes the photoreceiver 131 at a position where measurement is intended. The data acquisition button 521 is clicked on the notebook computer, and the spectral photosynthetic photon flux density at this position is measured. The spectral data is processed according to the processing condition, i.e., condition on wavelength ranges, which has been set in advance. As a result, the photosynthetic photon flux density of desired wavelength range is displayed on the display. The user can instantaneously confirm the spectral photosynthetic photon flux density distribution on the display in the place where the photoreceiver 131 was disposed, and can obtain the measurement result in real time. Real time in this means that the moment when the photoelectric conversion signal is obtained from the detector 14 by disposing the photoreceiver 131 is substantially the same as the moment when the spectral photosynthetic photon flux density distribution is observed on the display.

By clicking the data acquisition button 521 again with the same PPFD file opened, another spectral data set under a different measurement condition is additionally acquired. As described above, the spectral photosynthetic photon flux density obtained by carrying out the processing for each of spectral data sets can be displayed as overlapped. For instance, two or more spectral data sets are acquired by carrying out measurements as the photoreceiver 131 is disposed at different positions. This is done, for example, in checking whether spectral photosynthetic photon flux density distribution differs depending on positions. Otherwise, spectral data sets may be acquired by measurements for different kinds of light sources. In this case, each spectral photosynthetic photon flux density distribution calculated from each measurement result may be displayed to be compared.

In evaluating an artificial light source, a measurement to check the spectral coincidence with sunlight may be carried out together. The PPFD measurement program is provided to a user with a data file of the standard spectral irradiance (standard spectrum) of sunlight, which has been regulated in JIS (Japanese Industrial Standards). This data file is copied to a memorizing member in a computer when the PPFD program is installed. The PPFD measurement program contains a coincidence evaluation module. The coincidence evaluation module compares measured irradiance to the standard spectrum at each wavelength, and calculates the coincidence at each wavelength after calculating spectral irradiance by carrying out the processing onto the spectral data set acquired for the artificial light source. The calculated coincidences may be graphed and displayed in the graph display frame 53, and/or listed to be printed out.

As described above, the quantum meter of the embodiment may be used preferably for investigation of light environments for plants and evaluation of artificial light sources for plant growth because a spectral photosynthetic photon flux density distribution is displayed on the display in real time. For instance, the light environment where a plant grows may be optimized by evaluating the irradiance situation in every position in view of the photosynthetic photon flux density at each wavelength. In this case, because the spectral photosynthetic photon flux density can be checked in real time by this quantum meter, such an operation as change of illuminating condition can be done promptly. In evaluation and research of artificial light sources as well, this quantum meter can contribute greatly to improving efficiency of evaluation and research because a user does not have to carry out troublesome calculation to convert irradiance into the photosynthetic photon flux density at each wavelength.

The quantum meter of the embodiment is easy to change conditions of calculation and display because the photosynthetic photon flux density at each wavelength is calculated and displayed by that the processing member executes the PPFD measurement program. The quantum meter of the present invention may have the configuration where hardware converts each strength signal from the detector 14 into the photosynthetic photon flux density at each wavelength. For instance, a circuit may be configured so as to realizing the formula (1), employing such a device as OpAmp IC. Considering the change of the calculation condition, e.g., absolute value or relative value, however, it is preferable to realize not by hardware but by software because of easy response to the change.

In the configuration where the photosynthetic photon flux density is measured by a software, it may be downloaded and executed via a network, other than it is installed in the processing unit 2 as described. In this case, the processing unit 2 has a configuration capable of accessing the network. A server in which the photosynthesis photon flux measurement program is implemented is provided on the network. The processing unit 2 accesses the server and executes the photosynthesis photon flux measurement program on the server, otherwise makes it downloaded and executes it. This configuration is enabled in the same practical way as in ASP (Application Service Provider) or SaaS (Software as a Service). Therefore, detailed description is omitted.

As described, the quantum meter of the embodiment is preferable in observing only an effective wavelength range for photosynthesis because it is capable of displaying a spectral photosynthetic photon flux density distribution only for a designated wavelength range. In this, because two or more discontinuous wavelength ranges can be designated, optimum measurements are enabled according to effective wavelength ranges for various plants.

By the quantum meter of the embodiment, moreover, it is possible to know that how effective a specific light environment is for growth of a specific plant because the photon efficiency can be calculated. Therefore, this quantum meter is more preferable in carrying out investigation of light environments, and evaluation and research of artificial light sources.

Moreover, because the quantum meter of the embodiment comprises the spectroscope unit 1 and the processing unit 2 that is a general-use computer, it has the advantage of cost reduction and easier introduction for users. A user does not need to prepare a special one for a processing unit 2, but can compose it by installing the software package to his/her personal computer.

Moreover, because the general use interface such as USB is adopted to receive the photoelectric conversion signal from the detector 14 in the spectroscope unit 1, a general use spectroscope may be adopted as long as it comprises such a general use interface member 16. Therefore, if a user has such a spectroscope, a real-time spectral photosynthetic photon flux density measurement is enabled only by installing the software package to his/her computer. Therefore, introduction is made further easier. In this, because the spectroscope unit driver is included in the software package, the user does not need to obtain a device driver especially. The quantum meter of the embodiment is also convenient in this respect.

Though the above-described quantum meter employs the spectroscope unit driver carrying out interrupting transmission of the output data from the detector 14, a device driver carrying out bulk transmission may be adopted. In this case, a memory is provided in the interface member 16 on the spectroscope unit 1, in which the output data is memorized temporarily in a format such as CSV. When the data acquisition module 41 starts, the spectroscope unit driver carries out bulk transmission of the temporarily memorized data on the interface member 16.

An embodiment of the present invention may have the configuration where a processing member is provided in the spectroscope unit 1, other than a general use computer is the component of the processing unit 2. Concretely, a control board including a CPU as the processing member may be mounted in the casing 11 shown in Fig. 1. A memory and interfaces are provided on the control board. The PPFD measurement program described above is installed to the memory, and is made executable by the CPU. A display to display a calculated spectral photon flux density distribution is provided on the casing 11. In this configuration, no computer is needed especially, and the quantum meter composed of one unit. Therefore, the configuration is simplified, and convenience is increased in carrying.

Though the photosynthetic photon flux density is the photon flux density in the wavelength range of 400-700 nm, the photon flux density may be calculated and displayed outside this wavelength range as well. For instance, as known as Emerson effect, when near-infrared light of wavelength longer than 680 nm is irradiated to a plant, yield of photosynthesis increases with irradiance of blue light. To evaluate this effect, the photon flux density in the infrared range may be calculated. In the quantum meter of the embodiment, the whole detection range (dispersion wavelength range) in the spectroscope unit 1 is 200-800 nm, including such a wavelength range. Therefore, by making such a wavelength range designatable, it is possible to know the spectral photon flux density distribution for that as well. The total photon flux density within such a wavelength range is also known by summation.

As configuration of the spectroscope unit 1, it is possible to adopt the single channel configuration where a driving mechanism is provided to the dispersive element (grating) 12 for rotation to make light enter into a sensor band by band, other than the multichannel configuration where the described linear array sensor is used.

[Description of Symbols]

1 Spectroscope Unit
11 Casing
12 Dispersive Element (Diffraction Grating)
13 Incident Optical System
131 Photoreceiver
132 Optical Fiber
133 Incident Slit
14 Detector
16 Interface Member
2 Processing Unit
21 CPU
22 Memory
23 Hard Disk
24 Display
26 Interface Member
4 Photon Flux Density Measurement Program
41 Main Module
42 Data Acquisition Module
431 Absolute Value Calculation Module
432 Relative Value Calculation Module
44 Condition Setting Module
45 Special DLL File
521 Data Acquisition Button
522 Condition Setting Button
523 Absolute Value Calculation Button
524 Relative Value Calculation Button
53 Graph Display Frame
54 Numeric Data Display Frame
6 Wavelength Range Setting Window
61 Whole-range Setting Column
62 Individual-range Setting Column

**Claims**

1. A quantum meter which is **characterized by** that

a dispersive element to which a measurement light enters is provided,
a detector to which the measurement light dispersed by the dispersive element enters is provided,
a processing member processing a photoelectric conversion signal output from the detector is provided,
a display to display the photoelectric conversion signal processed by the processing member is provided,
the processing member calculates of the photosynthetic photon flux density at each wavelength by processing the photoelectric conversion signal output from the detector,
the display is capable of displaying in real time a spectral photosynthetic photon flux density distribution of the measurement light under an environment where the measurement light exists,
the processing member comprises a memory member on which a photosynthetic photon flux density measurement program is implemented, or is capable of executing the photosynthetic photon flux density measurement program via a network,
the processing member calculates the photosynthetic photon flux density at each wavelength by executing the photosynthetic photon flux density measurement program, and displays the spectral photosynthetic photon flux density distribution on the display,
an input member is provided to give information to the processing member,
the photosynthetic photon flux density measurement program is capable of making a wavelength range designated according to effective photosynthetic wavelength for a plant on the input member, and capable of calculating the photosynthetic photon flux density at each wavelength within the designated wavelength range,
the photosynthetic photon flux density measurement program displays the spectral photosynthetic photon flux density in the designated wavelength range, not displaying the spectral photosynthetic photon flux density in other wavelength ranges,
the photosynthetic photon flux density measurement program is capable of making a plurality of discontinuous wavelength ranges designated,
the photosynthetic photon flux density measurement program is capable of calculating the photosynthetic photon flux density of each designated discontinuous wavelength range, and
the photosynthetic photon flux density measurement program displays the spectral photosynthetic photon flux density in each designated discontinuous wavelength range, not displaying the spectral photosynthetic photon flux density in other wavelength ranges.

2. A quantum meter as claimed in the claim 1, which is **characterized by** that

the photosynthetic photon flux density measurement program is capable of calculating the effective spectral photosynthetic photon flux density for a specific plant by multiplying the spectral absorption rate of the plant to the measured spectral photosynthetic photon flux density, and capable of displaying the calculated effective spectral photosynthetic photon flux density on the display.

3. A quantum meter as claimed in the claim 1 or 2, which is **characterized by** that

the dispersive element and the detector are provided as those composing a spectroscope unit,
the processing member is provided as a component of a processing unit,
the processing unit is a general use computer, in which the photosynthetic photon flux density measurement program is installed.

4. A quantum meter as claimed in the claim 3, which is **characterized by** that

a device driver that receives the photoelectric conversion signal output from the detector via a general use interface is installed in the processing unit, and
the photosynthetic photon flux density measurement program calculates the photosynthetic photon flux density at each wavelength by processing the photoelectric conversion signal which the device driver receives.

Fig. 1

EP 2 995 915 A1

**Fig. 2**

EP 2 995 915 A1

Main Module — 41

Data Aqcuisition Module — 42

Absolute Value
Calculation Module — 431

Relative Value
Calculation Module — 432

Condition Setting Module — 44

⋮

Special DLL File — 45

4. PPFD Measurement Program

Fig. 3

EP 2 995 915 A1

| 521 | 522 | 523 | 524 | 51 | 527 | 528 | 529 | 52 |

**PPFD Measurement Program**  □ ▣ ✕

File (F)   Edit (E)   View (V)   Measure (M)   Tool (T)   Setting (S)   Help (H)

525 526

| New Creation | File Open | Preserve | Spectral Data Acquisition | Measurement Condition | Photon Flux Density (absolue value) | Photon Flux Density (relative value) | Spectral Absorption Rate Registration | Photon Efficiency Calculation | Spectral Irradiance |

53

54

| No. | Comment | Irr(mW/cm²) | PPFD (μmol/m²) |
|-----|---------|-------------|----------------|
| 1 | | 80.25 | 1985.07 |
| 2 | | 73.51 | 1880.86 |
| ▶3 | | 83.80 | 2156.49 |

55

Reference : Exposure Time = 2 0 m s , Integration Times = 1 0 0 , Optical System = Reflection Type

## Fig. 4

EP 2 995 915 A1

PPFD Measurement Program

File (F)  Edit (E)  View (V)  Measure (M)  Tool (T)  Setting (S)  Help (H)

New Creation  File Open  Preserve  Spectral Data Acquisition  Measurement Condition  Photon Flux Density (absolue value)  Photon Flux Density (relative value)  Spectral Absorption Rate Registration  Photon Efficiency Calculation  Spectral Irradiance

Wavelength Range Setting

Range of PPFD Calculation

400 ～ 700 n m

Range Setting

| | Name | Ranges to be set | | |
|---|---|---|---|---|
| ✓ | Area1 | 400 | ～ 450 | n m |
| ✓ | Area2 | 450 | ～ 500 | n m |
| ✓ | Area3 | 500 | ～ 550 | n m |
| ✓ | Area4 | 550 | ～ 600 | n m |
| ✓ | Area5 | 600 | ～ 650 | n m |
| ✓ | Area6 | 650 | ～ 700 | n m |

OK    Cancel

| No. | Comment | Irr(mW/cm²) |
|---|---|---|
| 1 | | 80.25 |
| 2 | | 73.51 |
| ▶3 | | 83.80 |

Reference : Exposure Time = 2 0 m s,  Integration Times = 100,  Optical System = Reflection Type

Fig. 5

EP 2 995 915 A1

521 522 523 524 51 527 528 529 52

525

□ PPFD Measurement Program

File (F)　Edit (E)　View (V)　Measure (M)　Tool (T)　Setting (S)　Help (H)

New Creation　File Open　Preserve　Spectral Data Acquisition　Measurement Condition　Photon Flux Density (absolue value)　Photon Flux Density (relative value)　Spectral Absorption Rate Registration　Photon Efficiency Calculation　Spectral Irradiance

526

53

PPFD (absolute value) (μmol/m²/sec/nm)

8

6

4

2

400　450　500　550　600　650　700

Wavelength (nm)

| No. | Comment | Irr(mW/cm²) | PPFD(μmol/m²) | Area1 | Area2 | Area3 | Area4 | Area5 | Area6 |
|---|---|---|---|---|---|---|---|---|---|
| ▶1 | | 80.25 | 1985.07 | 224.09 | 314.18 | 341.72 | 364.72 | 382.36 | 385.39 |
| 2 | | 73.51 | 1880.86 | 335.07 | 305.41 | 329.56 | 349.07 | 352.49 | 344.91 |
| 3 | | 83.80 | 2156.49 | 206.57 | 352.74 | 374.15 | 416.08 | 420.22 | 415.73 |

54

55

Reference : Exposure Time = 2 0 m s, Integration Times =100, Optical System = Reflection Type

Fig. 6

521 522 523 524 51 527 528 529 52

525

PPFD Measurement Program □◙☒

File (F)  Edit (E)  View(V)  Measure (M)  Tool (T)  Setting (S)  Help (H)

New Creation  File Open  Preserve  Spectral Data Acquisition  Measurement Condition  Photon Flux Density (absolue value)  Photon Flux Density (relative value)  Spectral Absorption Rate Registration  Photon Efficiency Calculation  Spectral Irradiance

526

53

| No. | Comment | Irr(mW/cm²) | PPFD (μmol/m²) | Area1 | Area2 | Area3 | Area4 | Area5 | Area6 |
|-----|---------|-------------|----------------|-------|-------|-------|-------|-------|-------|
| ▶1 | | 80.25 | 1985.07 | 224.09 | 314.18 | 341.72 | 364.72 | 382.36 | 385.39 |
| 2 | | 73.51 | 1880.86 | 335.07 | 305.41 | 329.56 | 349.07 | 352.49 | 344.91 |
| 3 | | 83.80 | 2156.49 | 206.57 | 352.74 | 374.15 | 416.08 | 420.22 | 415.73 |

54

55

Reference : Exposure Time = 2 0 m s, Integration Times = 100, Optical System = Reflection Type

Fig. 7

start

wavelength = lower bound ( λ 1 )

within designated range ?

No

Yes

acquire output value, calculate absolute spectral irradiance

calculate photon flux density, store in variable

is higher bound ( λ n) ?

Yes

No

next wavelength

readout of values from variables, graphing, summation within each range

end

Fig. 8

```
                        ( start )
                            │
        ┌───────────────────┴───────────────────┐
        │  wavelength = lower bound ( λ 1)       │
        └───────────────────┬───────────────────┘
        ┌──────────────────►│
        │                   ▼
        │         ◄ within designated range ? ►──── No ──┐
        │                   │                            │
        │                  Yes                           │
        │                   ▼                            │
        │     ┌──────────────────────────────┐           │
        │     │  acquire output value, calculate          │
        │     │  absolute spectral irradiance │           │
        │     └──────────────┬───────────────┘           │
        │                    ▼                            │
        │     ┌──────────────────────────────┐           │
        │     │  calculate photon flux density,           │
        │     │  store in variable            │           │
        │     └──────────────┬───────────────┘◄──────────┘
        │                    ▼
        │         ◄ is higher bound ( λ n) ? ►──── Yes ──┐
        │                    │                           │
        │                   No                           │
        │                    ▼                           │
        │     ┌──────────────────────────────┐           │
        │     │       next wavelength         │           │
        │     └──────────────┬───────────────┘           │
        └────────────────────┘                           │
                             ▼◄──────────────────────────┘
              ┌──────────────────────────────┐
              │  find highest value of photon │
              │  flux density in wavelengths  │
              └──────────────┬───────────────┘
              ┌──────────────────────────────┐
              │  wavelength = lower bound ( λ 1) │
              └──────────────┬───────────────┘
        ┌──────────────────►│
        │                   ▼
        │         ◄ within designated range ? ►──── No ──┐
        │                   │                            │
        │                  Yes                           │
        │                   ▼                            │
        │     ┌──────────────────────────────┐           │
        │     │  calculate relative value,    │           │
        │     │  update variable              │           │
        │     └──────────────┬───────────────┘◄──────────┘
        │                    ▼
        │         ◄ is higher bound ( λ n) ? ►──── Yes ──┐
        │                    │                           │
        │                   No                           │
        │                    ▼                           │
        │     ┌──────────────────────────────┐           │
        │     │       next wavelength         │           │
        │     └──────────────┬───────────────┘           │
        └────────────────────┘                           │
                             ▼◄──────────────────────────┘
              ┌──────────────────────────────┐
              │  readout of values from variables, graphing, │
              │  summation within each range  │
              └──────────────┬───────────────┘
                             ▼
                        (  end  )
```

# Fig. 9

Fig. 10

Fig. 11

## INTERNATIONAL SEARCH REPORT

| International application No. |
| --- |
| PCT/JP2014/062254 |

A. CLASSIFICATION OF SUBJECT MATTER
*G01J3/28*(2006.01)i, *A01G7/00*(2006.01)n

According to International Patent Classification (IPC) or to both national classification and IPC

B. FIELDS SEARCHED

Minimum documentation searched (classification system followed by classification symbols)
G01J3/00-G01J3/52

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
| --- | --- | --- |
| A | "Toriatsukai Setsumeisho Keitaigata Bunko Hoshakei MS-720", Eko Instruments Co., Ltd., 4th edition, 2012.12, 49 pages | 1-4 |
| A | Hiroshi HAMAMOTO et al., "The spectral ratio of red, green, and blue photon fluxes to the total flux of photosynthetic photons and the ratio of red to far-red photon fluxes of sunlight at Ayabe, Kyoto", Climate in biosphere, vol.12, 10 August 2012 (10.08.2012), pages 46 to 51 | 1-4 |
| A | FUJIWARA,K. et al., "Design and Development of a Plant-Response Experimental Light-Source System with LEDs of Five Peak Wavelengths", Journal of Light & Visual Environment, Volume 35, Number 2, 2012.01.11, Pages 117-122 | 1-4 |

☐ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 May, 2014 (20.05.14) | 03 June, 2014 (03.06.14) |

| Name and mailing address of the ISA/ Japanese Patent Office | Authorized officer |
| --- | --- |
| Facsimile No. | Telephone No. |

Form PCT/ISA/210 (second sheet) (July 2009)

**EP 2 995 915 A1**

## REFERENCES CITED IN THE DESCRIPTION

**Patent documents cited in the description**

- JP 2012163482 A